Europäisches Patentamt

European Patent Office

Office européen des brevets

(11) Publication number: **0 372 869**
**A1**

## (12) EUROPEAN PATENT APPLICATION

(21) Application number: **89312587.2**

(22) Date of filing: **01.12.89**

(51) Int. Cl.⁵: **C08L 77/00, //(C08L77/00, 51:06,23:00,23:00)**

(30) Priority: **05.12.88 GB 8828351**

(43) Date of publication of application:
**13.06.90 Bulletin 90/24**

(84) Designated Contracting States:
**DE ES FR GB IT SE**

(71) Applicant: **DU PONT CANADA INC.**
**Box 2200 Streetsville**
**Mississauga Ontario L5M 2H3(CA)**

(72) Inventor: **Sipos, Peter Andrew**
**637 Pimlico Place**
**Kingston Ontario K7M 5T7(CA)**

(74) Representative: **Harrison, David Christopher**
**MEWBURN ELLIS & CO 2/3 Cursitor Street**
**London EC4A 1BQ(GB)**

(54) **Nylon/grafted terpolymer release film for sheet moulding compound.**

(57) A release film for sheet moulding compound is disclosed. The film is made from a blend comprising comprising i) from 2 to 25 wt.% of a grafted terpolymer having two monomers selected from the group consisting of $C_2$ to $C_{20}$ alpha-olefins, ii) from 5 to 25 wt.% of a non-grafted terpolymer having two monomers selected from the group consisting of $C_2$ to $C_{20}$ alpha-olefins, iii) an aliphatic polyamide and iv) optionally an alpha-olefin polymer selected from the group consisting of homopolymers of ethylene, homopolymers of propylene, homopolymers of butene-1, copolymers of ethylene and a $C_3$ to $C_{10}$ alpha-olefin, copolymers of ethylene and acrylic acid, copolymers of ethylene and methacrylic acid, copolymers of ethylene and vinyl acetate, and ionomeric polymers derived from copolymers of ethylene and acrylic acid or methacrylic acid; said alpha-olefin monomers being present in the grafted terpolymer and the non-grafted terpolymer in amounts of up to 80 wt.% of the terpolymers; the total content of the alpha-olefin polymer, the grafted terpolymer and the non-grafted terpolymer being equal to or less than 30 wt.% of the blend, and the balance of the blend being an aliphatic polyamide, the melt viscosities of said polyamide, terpolymer and grafted terpolymer being selected such that the blend is homogeneous.

EP 0 372 869 A1

## NYLON/GRAFTED TERPOLYMER RELEASE FILM FOR SHEET MOULDING COMPOUND

The present invention relates to a release film for sheet moulding compound, and in particular a film made from a blend of nylon and a grafted polyolefin.

Sheet moulding compound, often known as SMC, is used in the manufacture of shaped articles such as body parts for cars, e.g. body panels, bumpers and fenders, body parts for boats, housings for electric and electronic components, e.g. housings for personal computers, switch boxes and the like. Sheet moulding compound generally comprises a crosslinkable polyester resin containing fibre reinforcement, e.g. glass fibres. The sheet moulding compound is usually manufactured by depositing the fibres onto a layer of uncrosslinked polyester resin which is supported on a moving support bed, e.g. a polyethylene or nylon film. Another film is placed on top of the resin/fibre composite to form a sandwich of the composite between two films. The sandwich is then passed through a series of rollers whose function is to knead the fibre and resin and cause thorough mixing of the fibre and resin. The sandwich is then wound up on rolls or cut to conveniently sized pieces and stored at ambient temperature ready for further processing. During the storage period the polyester resin partially crosslinks, causing an increase in the viscosity of the sheet moulding compound, until the compound is at a mouldable consistency. The users of the sandwich, i.e. moulders, cut a suitable length of the sandwich from a roll, strip the film from the sheet moulding compound prior to placing the sheet moulding compound in a suitably shaped mould, and then apply pressure and heat to achieve a full "cure", i.e. to fully crosslink, the polyester resin thermoset material. It is desirable that the films, which are usually known as release films, strip from the sheet moulding compound cleanly.

Two properties in particular are of importance to manufacturers and users of sheet moulding compound. The first is that of styrene permeability of the release film. It is desirable that the release film have sufficiently low styrene permeability to prevent undue loss of styrene monomer, which acts as a crosslinking agent for the polyester, from the sandwich. The second is that the release film should be easily peelable from the sheet moulding compound.

As indicated hereinabove polyethylene has been used as a release film for sheet moulding compound. Although the release characteristics of polyethylene are good enough for automated stripping operations, it has poor styrene permeability properties and rolls of sheet moulding compound are usually also wrapped in aluminium foil or a nylon film to prevent loss of styrene monomer.

In U.S. Patent 4 444 829, which issued 1984 April 24 to Bollen, Degrassi and Sacks, there is described a low crystallinity polyamide film comprising a blend of 90 to 70 wt.% of a polyamide having a crystallinity of less than 35% and 10 to 30 wt.% of a polyolefin component. The polyolefin component, which is a linear high molecular weight polymer of alpha-olefins, copolymer of alpha-olefin and vinyl acetate monomers or an alkyl acrylate, has a crystallinity of less than 50%. The film thickness is from about 12.7 to 127 $\mu$m, has a Graves tear strength of at least about 400 g in the longitudinal direction and a styrene permeability of below about $200 \times 10^{-9}$ g.cm/cm$^2$.h.

Some commercially available polyamide release films, while having sufficiently good styrene permeability characteristics, tend to have release properties which, while suited to manual stripping operations, are less suited for automated stripping operations. In manual stripping operations care must be exercised to ensure that the release film strips cleanly away from the sheet moulding compound and to ensure that the release film does not rip. The present invention provides alternatives to the currently-used commercial polyamide-based release films and, in some instances provides release films which are more suited for use in automated stripping operations.

The present invention provides a film made from a blend comprising i) from 2 to 25 wt.% of a grafted terpolymer having two monomers selected from the group consisting of $C_2$ to $C_{20}$ alpha-olefins, ii) from 5 to 25 wt.% of a non-grafted terpolymer having two monomers selected from the group consisting of $C_2$ to $C_{20}$ alpha-olefins, iii) an aliphatic polyamide and iv) optionally an alpha-olefin polymer selected from the group consisting of homopolymers of ethylene, homopolymers of propylene, homopolymers of butene-1, copolymers of ethylene and a $C_3$ to $C_{10}$ alpha-olefin, copolymers of ethylene and acrylic acid, copolymers of ethylene and methacrylic acid, copolymers of ethylene and vinyl acetate, and ionomeric polymers derived from copolymers of ethylene and acrylic acid or methacrylic acid; said alpha-olefin monomers being present in the grafted terpolymer and the non-grafted terpolymer in amounts of up to 80 wt.% of the terpolymers; the total content of the alpha-olefin polymer, the grafted terpolymer and the non-grafted terpolymer being equal to or less than 30 wt.% of the blend, and the balance of the blend being an aliphatic polyamide, the melt viscosities of said polyamide, terpolymer and grafted terpolymer being selected such that the blend is homogeneous.

2

In one embodiment the alpha-olefin monomers are $C_3$ to $C_{10}$ alpha-olefins, especially ethylene, propylene, butene-1, hexene-1 or octene-I, and more especially ethylene or propylene.

In another embodiment the aliphatic polyamide is made from an aliphatic dicarboxylic acid and an aliphatic diamine, each having from 6 to 24 carbon atoms.

In yet another embodiment the aliphatic polyamide is made from an aliphatic aminoacid or lactam having from 6 to 24 carbon atoms.

In a further embodiment the aliphatic polyamide is made from a mixture of i) a polyamide made from an aliphatic dicarboxylic acid and an aliphatic diamine, each having from 6 to 24 carbon atoms and ii) a polyamide made from an aliphatic aminoacid or lactam having from 6 to 24 carbon atoms.

Particularly preferred polyamides are nylon 66, nylon 6 and mixtures thereof. For nylon 6 intrinsic viscosities (IV) in the range of 0.85 to 1.4 dl/g may be used. It is preferred that the intrinsic viscosity be in the range of 0.95 to 1.2 dl/g. Intrinsic viscosity is measured at 25°C in formic acid (85 wt.% acid to 15 wt.% water) by methods known in the art. An especially preferred polyamide is nylon 66 having a relative viscosity (RV) in the range of 40 to 80, particularly 45 to 60. Relative viscosity is the ratio of viscosity at 25°C of an 8.4 wt.% solution of nylon in 90 wt.% formic acid (90 wt.% acid to 10 wt.% water) to the viscosity at 25°C of the 90 wt.% formic acid alone. The polyamide may be a blend of polyamides, e.g. nylon 66 having a relative viscosity of 45 and nylon 66 having a relative viscosity of 65. The polyamide may also be a blend of different polyamides, e.g. nylon 6 and nylon 66.

In another embodiment two of the monomers of the terpolymers (grafted or non-grafted) are selected from $C_2$ to $C_{10}$ alpha-olefins, styrene, acrylic acid, methacrylic acid, vinyl acetate and $C_4$ to $C_{12}$ dienes.

In yet another embodiment one of the monomers of the grafted or non-grafted terpolymers is selected from the group consisting of 1,4-hexadiene and norbornadiene. Norbornadiene is sometimes known as 5-ethylidene-2-norbornene.

In other embodiments the terpolymer is selected from the group consisting of styrene/butadiene/styrene block copolymers and ethylene/propylene/diene monomer elastomers, especially ethylene/propylene/1,4-hexadiene elastomers and ethylene/propylene/norbornadiene elastomers.

In a preferred embodiment the non-grafted terpolymer is ethylene/propylene/norbornadiene.

In another embodiment the grafted terpolymer is grafted ethylene/propylene/1,4-hexadiene.

In a further embodiment the alpha-olefin polymer is a copolymer of ethylene and/or propylene with at least one of butene-1, hexene-1, 4-methyl pentene-1 and octene-1.

In a particularly preferred embodiment the grafted terpolymer is an ethylene/propylene/1,4 hexadiene terpolymer which is present in the release film in the amount of from 2 to 20 wt.%, and especially a grafted terpolymer one having a melt index of from 5 to 30 dg/min.

In yet another embodiment the third monomer in the non-grafted terpolymer is selected from the group consisting of 1,3-butadiene, 1,4-hexadiene, norbornadiene, cyclopentadiene, dicyclopentadiene and cyclohexadiene isomers.

In another embodiment the grafting monomer is selected from the group consisting of acrylic acid, methacrylic acid, maleic acid, fumaric acid, itaconic acid, crotonic acid, 5-norbornene-2,3dicarboxylic acid, methyl-5-norbornene-2,3dicarboxylic acid, maleic anhydride, dimethylmaleic anhydride, monosodium maleate, disodium maleate, acrylamide, itaconic anhydride, citraconic anhydride, maleimide, N-phenylmaleimide, diethyl fumarate, vinyl pyridines, vinyl silanes, 4-vinyl pyridine, vinyltriethoxysilane and allyl alcohol.

In yet another embodiment the grafting monomer consists of at least two grafting monomers wherein one of the grafting monomers is selected from the group consisting of styrene, 2-methyl styrene, 4-methyl styrene, alpha-methyl styrene, beta-methyl styrene, 4-vinyl anisole, stilbene and indene, and mixtures thereof, and the other of the grafting monomers is selected from the group consisting of maleic anhydride, itaconic anhydride, citraconic anhydride, maleimide and N-phenylmaleimide, and mixtures thereof.

In another embodiment the grafting monomer is present in the graft polymer in an amount of from 0.05 to 2 wt.%.

In a preferred embodiment the grafting monomer is present in the graft polymer in an amount of from 0.05 to 0.5 wt.%.

In further embodiments the grafted terpolymer has a melt index, as determined by the procedure of ASTM D-1238 (Condition E), of from 5 to 50 dg/min, especially from 15 to 30 dg/min.

A number of methods have been developed for grafting monomers onto hydrocarbon polymers. For instance, the grafting of monomers onto molten polymers is known, e.g. as described in U.S. 4 612 155 to C.S. Wong and R.A. Zelonka, which issued 1986 September 16. A process in which a mixture of styrene and maleic anhydride is formed and then reacted with a polymer having active hydrogen atoms at a temperature above about 120½C is disclosed in Canadian Patent 907 248 of N.G. Gaylord, which issued 1972 August 08. A similar process is also disclosed by N.G. Gaylord et al. in Polymer Letters Vol. 10, pp 95-100 (1972). A process for modifying rheological or chemical and rheological propertiel of a polymer in which monomers are grafted on to a polymer in an extruder is disclosed in Canadian Patent 993 592 of R.A. Steinkamp et al., which issued 1976 July 20.

The films of the present invention may be dyed with thermally stable nylon compatible dyes, e.g. FILAMID (trade mark) dyes, or pigmented with thermally stable nylon or graft polymer compatible pigments, e.g. titanium dioxide.

The invention may be illustrated by reference to the following examples:

Example I

Films from several compositions within the scope of the present invention were prepared.

Granular polyamide resin was mixed with pellets of the grafted and non-grafted terpolymers and the mixture was then melt extruded and cast into film having a thickness of 25μm, using a Werner and Pfleiderer Corporation 53 mm twin screw extruder, a film forming die and chill roll casting machine. In the case of those compositions containing a pigment, the pigment was either added in the form of a pigment-containing polyamide resin or in the form of a pigment containing polyolefin. The films so formed were tested for release characteristics using an apparatus which was adapted to grasp the end of a 2.5 cm wide strip of film and to strip the film from a slab of sheet moulding compound at a constant rate of 1.5 cm/s. The apparatus was also adapted to determine the force required to strip the film. In the following table, the columns marked "Force" indicate the force required to strip the release film from the sheet moulding compound, expressed as a percentage of the force required to strip a commercially available release film, CAPRAN ER20 (trade mark) film which is believed to be made from a blend of nylon 6 and an ethylene/vinyl acetate copolymer, containing titanium dioxide. The accuracy of measurement of force is ±10%.

Table 1

| Composition | SMC Paste | Force | | % Grafted Polymer |
|---|---|---|---|---|
| | | 7 days | 14 days | |
| 817-159-73 | Appliance | 65 | 75 | 3 |
| 1817-168-6 | Appliance | 70 | 100 | 3 |
| 1817-173-55 | Appliance | 80 | 95 | 3* |
| 17-159-93 | Appliance | 65 | 75 | 3 |
| 1817-173-52 | Appliance | 96 | 100 | 3.75* |
| 1817-159-72 | Appliance | 55 | 45 | 4 |
| 1817-168-7 | Appliance | 55 | 100 | 4 |
| 1826-07-153 | Appliance | 65 | 35 | 4 |
| 1817-141-9 | Appliance | 55 | 25 | 5 |
| 1817-159-71 | Appliance | 45 | 45 | 5 |
| 1817-147-37 | Appliance | 110 | 115 | 5 |
| 1817-159-91 | Appliance | 100 | 65 | 5 |
| 1817-159-96 | Appliance | 80 | 75 | 5 |

* Outside the scope of the present invention; included for reference only.

The specific compositions are as shown in Table 2.

Table 2

| Composition | |
|---|---|
| 1817-159-73 | 3% g-EPH, 10% EPN, 0.5% TiO$_2$ |
| 1817-168-6 | 3% g-EPH, 10% EPN, 0.5% TiO$_2$ |
| 1817-173-55 | 3% g-PE, 9% PP, 3% E/P |
| 1817-159-93 | 3% g-EPH, 10% EPH, 0.5% TiO$_2$ |
| 1817-173-52 | 3.75% g-EP, 11.25% PP |
| 1817-159-72 | 4% g-EPH, 10% EPN, 0.5% TiO$_2$ |
| 1817-168-7 | 4% g-EPH, 13% EPN, 0.5% TiO$_2$ |
| 1826-07-153 | 4% g-EPH, 12% EPH, 1.0% TiO$_2$ |
| 1817-141-9 | 5% g-EPH, 10% EPN, 0.2% TiO$_2$ |
| 1817-159-71 | 5% g-EPH, 10% EPN, 0.5% TiO$_2$ |
| 1817-147-37 | 5% g-EPH, 10% EPH, 0.2% TiO$_2$ |
| 1817-159-91 | 5% g-EPH, 10% EPH, 0.5% TiO$_2$ |
| 1817-159-96 | 5% g-EPH, 15% EPH, 0.5% TiO$_2$ |

the remainder of the compositions consisting of nylon 66 having an RV of 52 wherein:

PE is low density polyethylene used as a carrier for TiO$_2$;

PP is SHELL GE 6100 (trade mark) polypropylene homopolymer;

E/P is PROFAX 7701 (trade mark) ethylene/propylene copolymer;

EPH is NORDEL 3681 (trade mark) ethylene/propylene/1,4-hexadiene terpolymer;

EPN is VISTALON 3708 (trade mark) ethylene/propylene/norbornadiene terpolymer;

g-EP is PROFAX 7701 ethylene/propylene copolymer grafted with 0.08 % maleic anhydride;

g-PE is SCLAIR 19C (trade mark) polyethylene grafted with 1.0 wt.% maleic anhydride (a 80:20 blend of E/P:g-PE has a melt index of 1.3);

g-PP is SHELL GE 6100 polypropylene grafted with 0.14 wt.% maleic anhydride, the grafted polymer having a melt flow index of 30;

g-PP1 is SHELL GE 6100 polypropylene grafted with 0.14 wt.% maleic anhydride, the grafted polymer having a melt flow index of 42;

g-EPH is NORDEL 3681 ethylene/propylene/1,4-hexadiene terpolymer grafted with 1.75 wt.% fumaric acid, the grafted polymer having a melt flow index of 3.0 (measured at 280°C); and

TiO$_2$ is titanium dioxide.

## Claims

1. A film made from a blend comprising i) from 2 to 25 wt.% of a grafted terpolymer having two monomers selected from the group consisting of $C_2$ to $C_{20}$ alpha-olefins, ii) from 5 to 25 wt.% of a non-grafted terpolymer having two monomers selected from the group consisting of $C_2$ to $C_{20}$ alpha-olefins, iii) an aliphatic polyamide and iv) optionally an alpha-olefin polymer selected from the group consisting of homopolymers of ethylene, homopolymers of propylene, homopolymers of butene-1, copolymers of ethylene and a $C_3$ to $C_{10}$ alpha-olefin, copolymers of ethylene and acrylic acid, copolymers of ethylene and methacrylic acid, copolymers of ethylene and vinyl acetate, and ionomeric polymers derived from copolymers of ethylene and acrylic acid or methacrylic acid; said alpha-olefin monomers being present in the grafted terpolymer and the non-grafted terpolymer in amounts of up to 80 wt.% of the terpolymers; the total content of the alpha-olefin polymer, the grafted terpolymer and the non-grafted terpolymer being equal to or less than 30 wt.% of the blend, and the balance of the blend being an aliphatic polyamide, the melt viscosities of said polyamide, terpolymer and grafted terpolymer being selected such that the blend is homogeneous.

2. A film according to Claim 1 wherein the aliphatic polyamide is made from an aliphatic dicarboxylic acid and an aliphatic diamine, each having from 6 to 24 carbon atoms.

3. A film according to Claim 1 wherein the aliphatic polyamide is made from an aliphatic aminoacid or lactam having from 6 to 24 carbon atoms.

4. A film according to Claim 1 wherein the aliphatic polyamide is made from a mixture of i) a polyamide made from an aliphatic dicarboxylic acid and an aliphatic diamine, each having from 6 to 24 carbon atoms and ii) a polyamide made from an aliphatic aminoacid or lactam having from 6 to 24 carbon atoms.

5. A film according to Claim 1 wherein the aliphatic polyamide is selected from the group consisting of nylon 66, nylon 6 and mixtures thereof.

6. A film according to Claim 5 wherein the nylon is nylon 66 having a relative viscosity of from 40 to 80.

7. A film according to Claim 5 wherein the nylon is nylon 66 having a relative viscosity of from 45 to 60.

8. A film according to Claim 5 wherein the nylon is nylon 6 having an intrinsic viscosity of from 0.85 to 1.4 dl/g.

9. A film according to Claim 5 wherein the nylon is nylon 6 having an intrinsic viscosity of from 0.95 to 1.2 dl/g.

10. A film according to any preceding claim wherein the grafted terpolymer is grafted with a grafting monomer selected from the group consisting of acrylic acid, methacrylic acid, maleic acid, fumaric acid, itaconic acid, crotonic acid, 5-norbornene-2,3dicarboxylic acid, methyl-5-norbornene-2,3dicarboxylic acid, maleic anhydride, dimethylmaleic anhydride, monosodium maleate, disodium maleate, acrylamide, itaconic anhydride, citraconic anhydride, maleimide, N-phenylmaleimide, diethyl fumarate, vinyl pyridines, vinyl silanes, 4-vinyl pyridine, vinyltriethoxysilane and allyl alcohol.

11. A film according to Claim 10 wherein the alpha-olefin polymer is selected from the group consisting of hompolymers of ethylene, homopolymers of propylene, ethylene/$C_3$ to $C_{10}$ alpha-olefin copolymers and ethylene/vinyl acetate copolymers.

12. A film according to Claim 10 or Claim 11 wherein the grafting monomer is maleic acid, maleic anhydride or fumaric acid.

13. A film according to Claim 10 or Claim 11 wherein the grafting monomer consists of at least two grafting monomers wherein one of the grafting monomers is selected from the group consisting of styrene, 2-methyl styrene, 4-methyl styrene, alpha-methyl styrene, beta-methyl styrene, 4-vinyl anisole, stilbene and indene, and mixtures thereof, and the other of the grafting monomers is selected from the group consisting of maleic anhydride, itaconic anhydride, citraconic anhydride, maleimide and N-phenylmaleimide, and mixtures thereof.

14. A film according to any one of Claims 10 to 13 wherein two of the monomers of the grafted terpolymer are selected from the group consisting of $C_2$ to $C_{10}$ alpha-olefins, styrene, acrylic acid, methacrylic acid, vinyl acetate and $C_4$ to $C_{12}$ dienes.

15. A film according to Claim 14 wherein one of the monomers is selected from the group consisting of 1,4-hexadiene and norbornadiene.

16. A film according to any one of Claims 10 to 15 wherein the grafted terpolymer is selected from the group consisting of grafted styrene/ butadiene/styrene block copolymers and grafted ethylene/propylene/diene monomer elastomers.

17. A film according to any one of Claims 10 to 15 wherein the grafted terpolymer is selected from the group consisting of grafted ethylene/propylene/ 1,4-hexadiene elastomers and grafted ethylene/propylene/norbornadiene elastomers.

18. A film according to any one of Claims 10 to 15 wherein the grafted terpolymer is grafted ethylene/propylene/1,4-hexadiene.

19. A film according to any one of Claims 10 to 18 wherein two of the monomers of the non-grafted terpolymer are selected from the group consisting of $C_2$ to $C_{10}$ alpha-olefins, styrene, acrylic acid, methacrylic aoid, vinyl acetate and $C_4$ to $C_{12}$ dienes.

20. A film according to Claim 19 wherein the aliphatic polyamide is selected from the group consisting of nylon 66, nylon 6 and mixtures thereof.

21. A film according to any one of Claims 10 to 20 wherein the grafting monomer is present in the graft polymer in an amount of from 0.05 to 2 wt.%.

22. A film according to Claim 14 or Claim 17 wherein two of the monomers of the non-grafted terpolymer are selected from the group consisting of $C_2$ to $C_{10}$ alpha-olefins, styrene, acrylic acid, methacrylic acid, vinyl acetate and $C_4$ to $C_{12}$ dienes.

23. A film according to Claim 22 wherein the aliphatic polyamide is selected from the group consisting of nylon 66, nylon 6 and mixtures thereof.

24. A film according to Claim 22 or Claim 23 wherein the grafting monomer is present in the graft polymer in an amount of from 0.05 to 2 wt.%.

European Patent
Office

EUROPEAN SEARCH REPORT

Application Number

EP 89 31 2587

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 403 797 (ICI LTD) <br> * Claims 1-10 * <br> --- | 1-24 | C 08 L 77/00 // <br> (C 08 L 77/00 <br> C 08 L 51:06 <br> C 08 L 23:00 <br> C 08 L 23:00 ) |
| X | GB-A-2 052 528 (UNITIKA LTD) <br> * Claims 1-6; page 2, lines 12-19 * <br> --- | 1-24 | |
| A | FR-A-2 580 656 (SOCIETE CHIMIQUES DES CHARBONNAGES SA) <br> * Claims 1-4 * <br> ----- | 1-24 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 17-03-1990 | GLANDDIER A. |

EPO FORM 1503 03.82 (P0401)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document